# EUROPEAN PATENT SPECIFICATION

(11) **EP 0 993 204 B1**
(45) Date of publication and mention of the grant of the patent: **06.09.2006**
(21) Application number: 99203804.2
(22) Date of filing: 29.01.1997
(51) Int. Cl.: H04N 9/75, H04N 5/272, H04N 5/222

(54) **Chroma keying studio system**
Farbstanzen-Studiosystem
Système d'incrustation couleur en studio

(30) Priority: 01.02.1996 US 595311; 30.07.1996 US 688300
(43) Date of publication of application: 12.04.2000
(62) Divisional of application: 97903548.2
(73) Proprietor: VI[Z]RT LTD, 60990 Shefayim (IL)
(72) Inventor: Tzidon, Aviv, 46100 Azur (IL); Tzidon, Dekel, 12430 Ramat Hagolan (IL)
(74) Representative: McCarthy, Denis Alexis

(56) References cited:
- US-A- 2 920 134
- US-A- 5 059 019
- HUGHES D: "VIRTUAL STUDI TECHNOLOGY. THE 1996 EUROVISION SONG CONTEST" EBU REVIEW- TECHNICAL,BE,EUROPEAN BROADCASTING UNION. BRUSSELS, no. 268, page 7-13 XP000598994 ISSN: 0251-0936
- WILLIM B.; BOLEWSKI N.: 'Das virtuelle Studio' FERNSEH- UND KINOTECHNIK vol. 49, no. 1, pages 31 - 34

## Description

The present invention pertains generally to studio prompting which makes chroma key studios and virtual sets more tangible, thereby making it easier for the actor to find his place within the blue screen environment.

Chroma-keying and virtual set technology enable actors in a studio to appear as if they are in a more complex environment. Using this technology, scenes comprised of a number of sources, such as live video and computer graphics can be created and combined together.

In many television (TV) programs which are broadcast from television studios, live video is combined with backgrounds which were prepared in advance. This technology is called "chroma-key". The backgrounds used in this technology can be still photographs, videotape, computer generated graphics, or any other picture.

The actor (the newscaster, weather forecaster, etc.) stands in front of a plain blue screen in the studio. The television camera shoots both the actor (live video) and the blue screen. The resulting picture is then transferred to a chroma-keyer, for processing. At the same time, a background picture from a different source (such as another camera, pre-taped video or computer graphics) is transferred to the chroma-keyer.

Both pictures, the live and the background picture, are combined in the chroma-keyer and broadcast as one picture which shows the live video on the background. For example, the final result can be a weather forecaster standing in front of a weather map which cannot be seen at all in the physical studio.

The chroma-keyer can differentiate between the live video and the blue background, according to the pixels. Wherever a pixel from the live video is identified, it is transferred to the combined broadcast picture. Wherever a pixel from the blue screen is identified, the appropriate pixel from the background is placed into the broadcast picture. In this way, a new picture is created and broadcast, using the background which was chosen.

In a blue screen environment, the image of an actor will be placed in a virtual space, which is not visible during filming of a scene. The actor must therefore imagine the set and practice long hours in order to point in the right direction or avoid walking into virtual walls, people and other objects which are part of the set.

In the above technology, the actor finds himself in a virtual space, which he does not actually see during shooting of the scene. The actor must therefore imagine the set and practice long hours in order to point in the right direction or avoid walking into virtual walls, people and other objects which are part of the set.

There are two ways currently used to help the actor find his way around within the set. Because neither of the solutions is perfect, the two are usually combined together:
1. Marking the places of objects and of the actor himself on the floor with masking tape. This solution is problematic in scenes which are comprised of a number of sets and for scenes in which the integrated object is in movement.
2. A monitor which displays the integrated picture for the actor. This solution causes the actor to focus his gaze on places which are not necessarily part of the scene. For example, the weather forecaster may need to point to a map on the wall in back of him, but in order to see the feedback on the monitor regarding the location of his finger, he is required to look straight ahead. There are also a number of techniques which enable the actor to find his place so that he can react in time to various events:
   1 . A flash of light which is synchronized with the cameras.
   2. Sounds to signify events.

Hughes D: "Virtual Studio Technology. The 1996 Eurovision Song Contest" EBU Technical Review, BE, European Broadcasting Union, Brussels No. 268, pages 7 - 13 XP000598994 ISSN: 0251-0936 published on 1 June 1996 describes how the Eurovision Song Contest included one hour of the programme, in 1996 made in a "virtual studio". In the referenced article, the author reports on many of the aspects that had to be considered, leading up to and during transmission of the programme.

United States Patent Specification No. US 2,920,134 published January 5^{th} 1960 discloses a motion picture making apparatus having means for projecting information and instructions into an arena which is being televised or photographed by an electronic camera. The electronic camera is operable repetitively through a cycle, and is blind during a portion of each cycle. The apparatus includes a set with scenery in the field of the camera, the scenery including a limited area illuminated for a prompter sign, and means illuminating the field with outlines of illumination shaped to convey particular information to actors on the set, the area for informing any actor being located on the set ahead of the position occupied by that actor at the time the information is to be conveyed. There is also instantaneous lighting means for illuminating the limited area, and control apparatus for extinguishing the lighting means, the control apparatus including a synchronizer that operates the instantaneous lighting means in timed relation with the blind periods of the camera to extinguish the lighting means before the termination of each blind period.

Willim B, Bolewski N: "Das virtuelle Studio", Fernseh- und kinotechnik, Vol. 49, No 1-2/1995, pages 31-34 describes developments in advanced virtual studio techniques in the years 1992 to 1994.

For the reasons stated above, and for other reasons stated below which will become apparent to those skilled in the art upon reading and understanding the present specification, there is a need in the art for a way to integrate a foreground and background using chroma keying and a shadow, while avoiding the lighting and quality problems encountered in the current integration process. A system is needed for locating a foreground image in virtual space is needed to facilitate assembling composite videos. Finally, there is a need for a system which prompts an actor during blue screen filming.

The above mentioned problems with chroma keying and other problems are addressed by the present invention and which will be understood by reading and studying the following specification. The invention is more patticularly defined in the appended claims.

A system is described whereby the main objects of a set can be projected on the floor or on the studio walls in real time. This enables actors to easily find their way around the set, and to focus on the virtual objects appearing in or disappearing from the studio. The projected images are projected in a chroma color.

An additional system is described which uses multiple cameras to identify the location of an object in a three dimensional virtual image. The location of the object is used to determine which virtual images are located in front of the object and which virtual images are located behind the object.

The present invention also provides a method and apparatus whereby the main objects of the set and special markings will be projected or screened on the floor or on the studio walls in real time. This will enable the actor to easily find his way around the set, and to focus his gaze on the virtual objects appearing in or disappearing from the studio. The present invention gives the actor the timings for various events taking place in the studio. The special markings are completely invisible to the camera and to the home viewers because they are only active during blanking, intervals of the video camera signal such as the vertical blanking, interval or the horizontal blanking interval in an NTSC, PAL, SECAM or other video signal format.

### Brief Description of the Drawings

Figure 1 is a computer and virtual background image;
Figure 2 is a system block diagram and process flow for locating a foreground object;
Figure 3 is a video studio incorporating the system of Figure 6;
Figure 4 shows a prompting system block diagram and process flow; and
Figure 5 shows use of the prompting system of Figure 1 in a blue-screen studio environment.

### Detailed Description of the Invention

In the following detailed description of the preferred embodiments, reference is made to the accompanying drawings which form a part hereof, and in which is shown by way of illustration specific preferred embodiments in which the inventions may be practised. These embodiments are described in sufficient detail to enable those skilled in the art to practice the invention, and it is to be understood that other embodiments may be utilized and that logical, mechanical and electrical changes may be made without departing from the spirit and scope of the present inventions. The following detailed description is, therefore, not to be taken in a limiting sense, and the scope of the present inventions is defined only by the appended claims.

The term "foreground" as used herein refers to objects which are filmed in front of a blue screen and combined with another video image. Although the objects are filmed in the foreground with respect to the blue screen, the foreground objects may ultimately be a background image in a completed video.

As explained above, chroma keying requires a foreground object, such as an actor, to be filmed in front of a plain blue screen in a studio. A video camera is used to film both the foreground object and the blue screen. The resulting picture is then transferred to a chroma-keyer, for processing. The blue background is replaced, pixel-by-pixel, with a background picture from a different source. One such source can be a computer which generates background graphics, thereby, providing a three dimensional virtual background which is substituted for the blue screen. The virtual background image is generated according to the camera position and its field of view. Thus, for each frame in the video, a current background image is calculated according to the camera position data.

### Foreground Object Location

In the virtual set the terms "background" and "foreground" can be misleading, since the "background" (typically computer graphics) can appear in front of the "foreground" at times. For example, a three layer video may be created where the first layer (layer 1) consists of a computer graphics background, a second layer (layer 2) consisting of a foreground object or live video hiding parts of the first layer, and a third layer (layer 3) consisting of additional computer graphics, hiding parts of both layer 1 & layer 2. In order to accomplish this effect in real time and fully automatically, the location of the foreground object in the virtual space must be known.

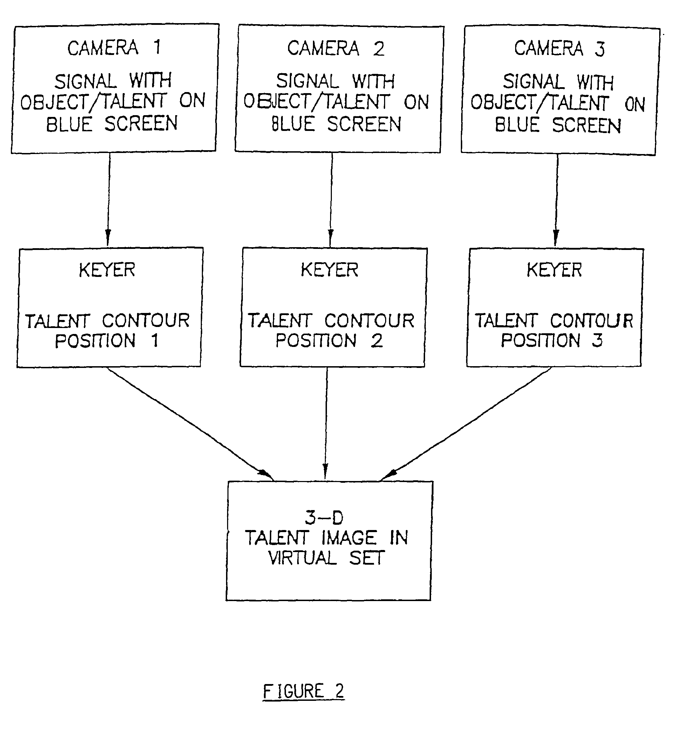

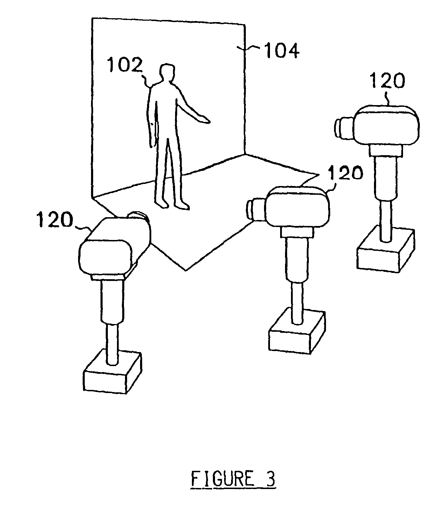

A method and system are described below which provides the location, or depth, of a foreground object in the 3-D virtual world. Referring to Figures 2 and 3, the system includes three cameras 120 positioned in a triangle pointing to the center of the stage to capture the contour of the foreground object 102 from three different directions. A computer operating according to a program calculates the volumetric image of the foreground object and its location in the virtual space. Once the location of the foreground object in the set is known, the multiple layers of a video can be assembled in appropriate positions.

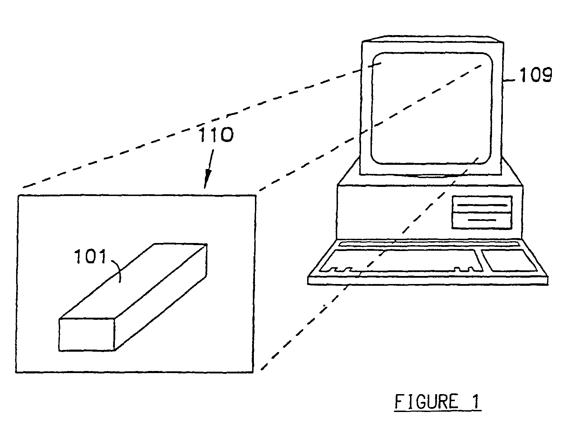

A three dimensional background image can be created according to the main camera 100 position and its field of view, see Figure 1. That is, a virtual environment, or 3-D Set, database is created using a computer, as explained above. For each frame in the video, the current background image is calculated according to the main camera position image.

Each of the three cameras 120 see the foreground object 102 as a two dimensional image. After filtering out the blue screen background using a chroma keyer, the contour image of the foreground object remains. This shape represent the physical volume from the camera's point of view to the stage surface. Now, by utilizing the inputs of all three cameras in the triangle, the approximate location of the object within the virtual background can be obtained using the cross-section of the overlapping volumes. The cross section of the overlapping volumes represents the object volumetric image. By obtaining the object's three dimensional volumetric shape, a depth location of the object on the stage can be obtained. The depth location allows a depth value (Z value) to be assigned to each pixel of the object's image. Once the depth location of the foreground object in the set is known, it can be calculated which virtual object will appear behind the talent and which objects will appear in front.

The video system described above can be combined with a system for prompting actors in a blue screen environment.

### Actor Prompting

The video systems, as described above, can be combined with a method and apparatus to project the main objects of the virtual set in a chroma keying environment for prompting actors with audio or visual cues.

Special markings are projected or screened on to the floor 103 or on the studio walls 104 in real time. This enables the actor 102 to easily find his or her way around the virtual set, and to focus his or her gaze on the virtual objects appearing in or disappearing from the studio. The markings also give the actor the timings for various events taking place in the studio.

The markings are invisible to the home viewer because they are projected in a chroma-key color. Alternatively, the special markings are completely invisible to both the first camera and to the home viewers because they are only active during blanking intervals of the video camera signals such as the vertical blanking interval or the horizontal blanking interval in an NTSC, PAL, SECAM or other video signal format. Those skilled in the art will readily recognize that the horizontal blanking and vertical blanking intervals of a television signal correspond to the retrace period for the video or television CRT in which the electron beam is repositioned to begin tracing a new line or a new field, respectively. The blanking interval is also known as the retrace time.

The method consists of first creation of the virtual scene on a computer. The prompting guide for chroma keying is used to create a virtual set on a computer using a sketch of the set and the important objects in it. The places where the actor must be found at various times are indicated in the computer model.

In use, the places where the actor must place himself at various times are projected on the floor or wall by use of a small arrow or other indicator that shows the actions about to take place. Another sign which indicates where the actor should focus his gaze (in the future, this sign will also show the actor his next line of text). All of the signs can appear with the time in which the next action or event is to take place.

All of the above signs will take place relative to the database of the set stored in the computer and synchronized with the chroma keying equipment and the video studio master synchronization signal. Transformations for the coordinates of the movable projector which projects this data on the studio walls and floor are made in order to fix the distortions which take place on the picture as a result of putting it on real objects in the studio.

The feedback to the actor can be screened in the studio with the help of a prompting device 122 which can be either a light projector, a projector and video, or a laser that is controlled by the computer. In addition, it will be possible to make this picture hidden from the viewer by the fact that the shooting will take place in full sync with the Time Code of the cameras or by the use of chroma-key colors.

### Table 1 Time Calculations (PAL)

| | |
|---|---|
| Line Blanking | 4.7 + 11.5 [µsec] |
| Line period | 63.5 |
| Field blanking | 25 lines + 1 line blanking 1.6 [msec] |
| Number of fields per second 25 | |

Table 1 shows some of the timing constraints for a PAL video signal in which the video prompts are projected within the blanking intervals. High resolution laser can draw approximately 100 dots in one frame, which is enough for either small animations at different locations on the set or much larger static drawings.

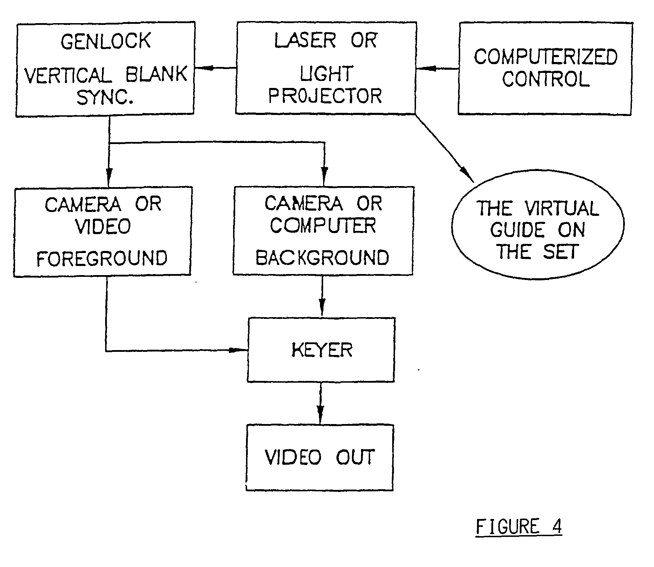

Figure 4 shows the system block diagram. A Genlock device is used to synchronize the components to a common video signal timing. All studio cameras are synchronized to the Genlock as well as the laser or light projector. The computer generates the prompts that the projector will display or flash during the blanking interval. The foreground and background video sources are combined by the chroma keyer to produce the composite video. The resulting video will not show the prompting from the projector since the prompting only appeared during the blanking intervals. The latency of the human eye allows the actors on the set to see the flashing prompts, but the video equipment does not contain such latency so the prompts will not be picked up.

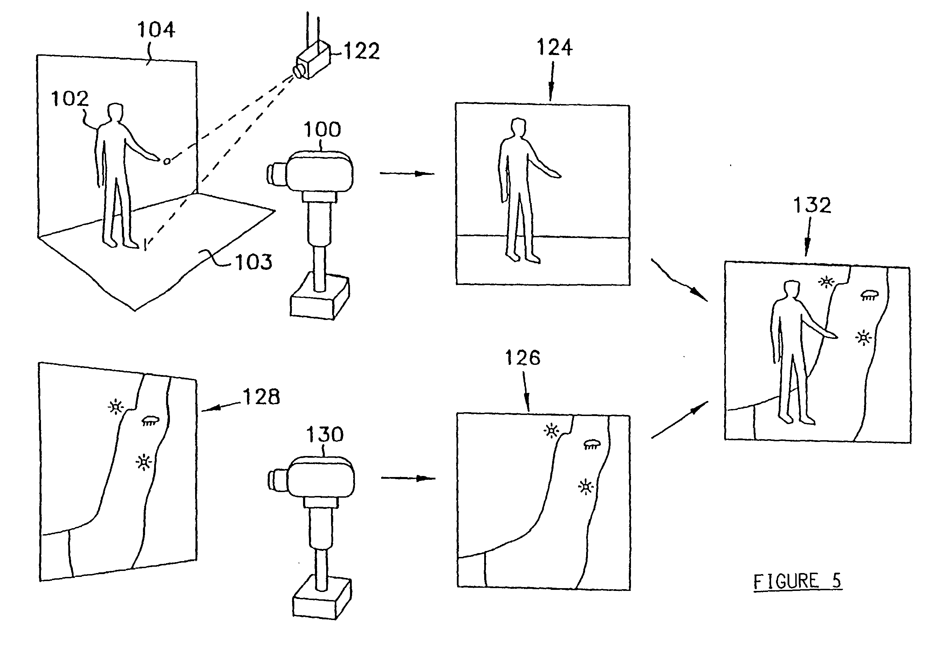

Figure 5 shows a typical blue-screen chroma key set typically used for reporting the weather on television. The actor 120 stands before a blue screen 104 and the prompting device 122 projects prompting images onto the floor 103 and onto the blue screen to tell the actor where to stand and point. The main video camera 100 picks up the image 124, but the image does not contain the prompts. A second background video image of a map 128 is picked up by another video camera 130 to produce a background image 126 which is combined with the foreground image 124 to produce the composite video image 132 devoid of any prompting images.

### Conclusion

A system and method have been described for locating an object in a three dimensional virtual environment. The system uses three video cameras to capture a video image of an object in front of a blue screen. The images are processed by a chroma keyer to isolate the object image. The three images and the location of the cameras are used to identify where the image from the main camera is relative to virtual objects.

The video system can be combined with actor prompting techniques to provide a complete filming environment. Special markings are projected or screened on the floor or on the studio walls in real time. The special markings are projected in either a chroma-key color or are only active during virtual blanks of the camera such as the vertical blanking interval or the horizontal blanking interval in an NTSC, PAL, SECAM or other video signal format.

## Claims

1. A system for directing an actor (102) in a chroma key environment, comprising:
a computer (109) having a model of a TV studio set stored therein and having directions for the actor also indicated in the computer model; a video camera (120) generating a video signal;
a chroma keying circuit connected to the video camera and the computer (109);
a projector (122) connected to the computer and the chroma keying circuit for projecting images in a chroma keying color the projected images being visible to the actor but hidden from the viewer.

2. The system of claim 1 where the projector (122) is a laser generating a chroma keying color.

3. The system of claim 1 where the projector (122) projects chroma keying color images onto the TV studio.

4. A method of prompting an actor (102) in a TV studio, comprising the steps of:
programming a computer with a description of a studio set; and
prompting the actor using a chroma keying color, wherein the step of prompting further comprises the step of projecting information onto the studio set in a chroma keying color.

## Patentansprüche

1. System zum Dirigieren eines Darstellers (102) in einer Chroma-Key-Umgebung, folgendes umfassend:
einen Computer (109), in welchem ein Modell einer TV-Studiogruppe gespeichert ist und der Direktionen für den Darsteller aufweist, die ebenfalls in dem Computermodell eingeschlossen sind,
eine Videokamera (120), welche ein Videosignal erzeugt,
eine Chroma-Key-Schaltung, die an die Videokamera und den Computer (109) angeschlossen ist,
einen Projektor (122), der an den Computer und die Chroma-Key-Schaltung angeschlossen ist zum Projizieren von Bildern in einer Chroma-Key-Farbe, wobei die projizierten Bilder sichtbar sind für den Darsteller, jedoch unsichtbar für den Betrachter.

2. System gemäß Anspruch 1, wobei der Projektor (122) ein Laser ist, der eine Chroma-Key-Farbe erzeugt.

3. System gemäß Anspruch 1, wobei der Projektor (122) Chroma-Key-Farbbilder auf das TV-Studio projiziert.

4. Verfahren zur Bedienerführung eines Darstellers (102) in einem TV-Studio, die folgenden Schritte umfassend:
Programmieren eines Computers mit einer Beschreibung einer Studioanordnung sowie
Bedienerführung des Darstellers unter Einsatz einer Chroma-Key-Farbe, wobei der Schritt der Bedienerführung darüber hinaus den Schritt des Projizierens von Informationen auf die Studioanordnung in einer Chroma-Key-Farbe umfasst.

## Revendications

1. Un système destiné à diriger un acteur (102) dans un environnement d'incrustation en chrominance, comportant :
un ordinateur (109) ayant un modèle d'un plateau de studio de télévision stocké dans celui-ci et ayant des instructions pour l'acteur aussi indiquées dans le modèle informatique ;
une caméra vidéo (120) générant un signal vidéo ;
un circuit d'incrustation en chrominance raccordé à la caméra vidéo et à l'ordinateur (109) ;
un projecteur (122) raccordé à l'ordinateur et au circuit d'incrustation en chrominance destiné à projeter des images dans une couleur d'incrustation en chrominance, les images projetées étant visibles par l'acteur mais cachées du téléspectateur.

2. Le système de la revendication 1 où le projecteur (122) est un laser générant une couleur d'incrustation en chrominance.

3. Le système de la revendication 1 où le projecteur (122) projette des images couleur d'incrustation en chrominance sur le studio de télévision.

4. Un procédé pour souffler à un acteur (102) dans un studio de télévision, comportant les étapes de :
programmer une description d'un plateau de studio dans un ordinateur ; et
souffler à l'acteur en utilisant une couleur d'incrustation en chrominance, l'étape de soufflage comportant de plus l'étape de projeter des informations sur le plateau de studio dans une couleur d'incrustation en chrominance.
